# EUROPEAN PATENT APPLICATION

(11) **EP 2 851 923 A1**
(43) Date of publication of application: **25.03.2015**
(21) Application number: 13769712.4
(22) Date of filing: 14.03.2013
(51) Int. Cl.: H01H 37/76, H01M 10/44

(54) **PROTECTION MEMBER**

(30) Priority: 26.03.2012 JP 2012069657
(71) Applicant: Dexerials Corporation, Tokyo 141-0032 (JP)
(72) Inventor: EJIMA, Koji, Tokyo 141-0032 (JP); KIMURA, Yuji, Tokyo 141-0032 (JP); MUKAI, Kouichi, Tokyo 141-0032 (JP); FURUUCHI, Yuji, Tokyo 141-0032 (JP)
(74) Representative: Müller Hoffmann & Partner
(86) International application number: PCT/JP2013/057163
(87) International publication number: WO 2013/146291

(57) **Abstract**

To realize a protection member that makes a flux amount applied on a fusible conductor uniform, and improves variation of fusing characteristics because, when a projection portion of a cover member is arranged alone on the fusible conductor, the projection portion is not sufficient to hold flux on the fusible conductor, and the variation is caused in the fusing characteristics. The protection member includes an insulating substrate (11), a heating body (14), an insulating member (15), two electrodes (12), a heating body internal electrode (16), a fusible conductor (13) layered from the heating body internal electrode (16) to the two electrodes (12), and configured to fuse a current path between the two electrodes (12) by heating, flux (17) applied on the fusible conductor (13) to superimpose with the heating body (14), and a cover member (1) covering at least the fusible conductor (13) and attached to the insulating substrate (11). The cover member (1) further includes a plurality of cylindrical projection portions (2) facing the heating body (14) and formed on an inner surface (1a) of the cover member (1) to be in contact with the flux (17).

## Description

### Technical Field

The present invention relates to a protection member that protects a circuit connected on a current path by fusing the current path.

The present application is based upon and claims the benefit of priority from Japanese Patent Application No. 2012-069657, filed on March 26, 2012 in Japan, the entire contents of which are incorporated herein by reference.

### Background Art

Many of secondary batteries that can be charged and repetitively used are processed into battery packs and provided to users. Especially, a lithium ion secondary battery having high weight energy density typically houses several protection circuits, such as overcharge protection and over-discharge protection, in the battery pack to protect safety of the user and an electronic device, and has a function to cut off an output of the battery pack in a predetermined case.

The lithium ion secondary battery performs an overcharge protection operation or an over-discharge protection operation of the battery pack by performing ON/OFF of the output by using an FET switch housed in the battery pack. However, when the FET switch is short-circuit and broken in some cause, when lighting surge or the like is applied and an instantaneous large current flows, or even when an output voltage is abnormally decreased, or contrary to that, an excessive abnormal voltage is output, due to the end of life of a battery cell, the battery pack and the electronic device must be protected from accidents, such as ignition. Therefore, to safely cut off an output of the battery cell in any assumable abnormal state like the above, a protection member made of a fuse element having a function to cut off a current path with a signal from outside is used.

As a protection member of protection circuits for lithium ion secondary batteries, as described in Patent Literature 1, a structure that includes a heating body inside the protection member, and fuses a fusible conductor on a current path with the heating body is typically used.

### Citation List

### Patent Literature

Patent Literature 1: JP 2010-3665 A

### Summary of Invention

### Technical Problem

In a protection member described in Patent Literature 1, flux is applied on a surface of a fusible conductor (fuse) made of a low melting point metal for purposes of antioxidation, facilitation of melting, and improvement of fusing characteristics. Further, a cover member is provided to cover a substrate that configures the protection member for quality assurance of the protection member. With uniform application of the flux on the fusible conductor, heat generation distribution of the fusible conductor becomes uniform, and variation of the fusing characteristics of the fusible conductor becomes small. Therefore, to hold the applied flux and make the flux amount on the fusible conductor uniform, the cover member includes, on an inner surface of the cover member, a cylindrical projection portion to surround a central portion on the fusible conductor.

However, as a result of examination afterward, it has been found out that, when the cylindrical projection portion is arranged on the fusible conductor alone, the projection portion is not sufficient to hold the flux on the fusible conductor, and causes variation of the fusing characteristics. Further, it has been found out that a position where the cylindrical projection portion is arranged needs to be appropriately selected in order to hold the flux amount on the fusible conductor uniformly.

Therefore, an objective of the present invention is to realize a protection member that makes a flux amount applied on a fusible conductor uniform and improves variation of fusing characteristics.

### Solution to Problem

As means for solving the above problems, a protection member according to the present invention includes: an insulating substrate; a heating body layered on the insulating substrate; an insulating member layered on the insulating substrate to cover at least the heating body; a first electrode and a second electrode layered on the insulating substrate on which the insulating member is layered; a heating body internal electrode layered on the insulating member to superimpose with the heating body, and electrically connected with a current path between the first electrode and the second electrode, and with the heating body; a fusible conductor layered from the heating body internal electrode to the first electrode and to the second electrode, and configured to fuse a current path between the first electrode and the second electrode by heating; a flux applied on the fusible conductor to superimpose with the heating body; and a cover member covering at least the fusible conductor and attached to the insulating substrate. Then, the cover member includes a plurality of projection portions having an annular periphery formed on an inner surface of the cover member to be in contact with the flux and facing the heating body.

### Advantageous Effects of Invention

The present invention includes a plurality of projection portions having an annular periphery formed on an inner surface of a cover member to be in contact with flux and facing a heating body. Therefore, the flux amount above the heating body attracted by surface tension to heads of the projection portions becomes uniform, and heat generation distribution of a fusible conductor above the heating body becomes uniform, whereby variation of the fusing characteristics is decreased.

### Brief Description of Drawings

Fig. 1A is an A-A' portion cross sectional view of a cover member that configures a protection member to which the present invention is applied. Fig. 1B is a bottom view of the cover member.
Fig. 2A is a plan view in a state where the cover member is removed for illustrating a configuration of the protection member to which the present invention is applied. Fig. 2B is a B-B' portion cross sectional view illustrating a structure of the protection member in a state where the cover member is mounted on the protection member of Fig. 2A.
Fig. 3 is a block diagram illustrating an application example of the protection member to which the present invention is applied.
Fig. 4 is a diagram illustrating a circuit configuration example of the protection member to which the present invention is applied.
Fig. 5A is an A-A' portion cross sectional view of a cover member that configures a conventional protection member. Fig. 5B is a bottom view of the cover member that configures a conventional protection member, and is a conceptual diagram illustrating a state of flux together. Fig. 5C is a cross sectional view.
Fig. 6A is an A-A' portion cross sectional view of a cover member that configures a conventional protection member. Fig. 6B is a bottom view of the cover member that configures a conventional protection member, and is a conceptual diagram illustrating a state of flux together. Fig. 6C is a cross sectional view.
Fig. 7A is a cross sectional view of a cover member illustrating one modification of embodiments of the protection member of the present invention. Fig. 7B is a bottom view.
Fig. 8A is a cross sectional view of a cover member illustrating one modification of embodiments of the protection member of the present invention. Fig. 8B is a bottom view.
Fig. 9A is a cross sectional view of a cover member illustrating one modification of embodiments of the protection member of the present invention. Fig. 9B is a bottom view.
Fig. 10A is a cross sectional view of a cover member illustrating one modification of embodiments of the protection member of the present invention. Fig. 10B is a bottom view.
Fig. 11A is a cross sectional view of a cover member illustrating one modification of embodiments of the protection member of the present invention. Fig. 11B is a bottom view.
Fig. 12A is a cross sectional view of a cover member illustrating one modification of embodiments of the protection member of the present invention. Fig. 12B is a bottom view.

### Description of Embodiments

Hereinafter, embodiments for implementing the present invention will be described in detail with reference to the drawings. Note that the present invention is not limited to the embodiments below, and it is apparent that various modifications can be made without departing from the gist of the present invention.

### [Configuration of Protection Member]

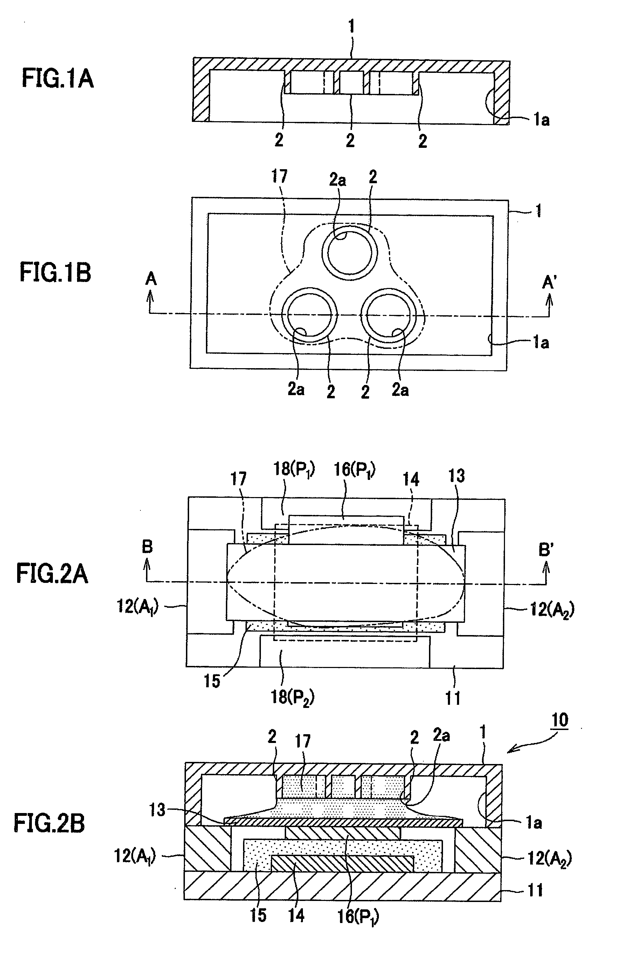

As illustrated in Figs. 1A and 1B, a cover member 1 includes, on an inner surface 1a of the cover member 1, three projection portions 2, heads of which are arranged at positions facing a position of a heating body 14. The projection portion 2 has the inner surface 1a of the cover member 1 as bottom surface, and has a cylindrical shape with an open head. The cylindrical projection portions 2 are arranged at the positions facing the rectangular heating body 14 through a fusible conductor 13 when the cover member 1 is attached to cover a main body of a protection member 10. The height of the cylindrical projection portion 2 is determined such that the head of the cylindrical projection portion 2 is positioned to be in contact with a surface of flux 17 applied on a surface of the fusible conductor 13. An inner surface 2a of the cylindrical projection portion 2 forms a space to be filled with the flux 17, which is attracted by surface tension of the flux 17 that is in contact with the head. A wall surface of the inner surface 2a may be smooth, or may be rough in a pear skin manner. The cover member 1 is used for protection of the interior of the protection member 10, and is formed of an insulating material. For example, an insulating material having predetermined heat resistance, such as glass epoxy, or ceramics, can be used. The number of the cylindrical projection portions 2 is not limited to three, and may be four or more, or may be two, as described below. The cover member 1 is typically integrally molded including the projection portions 2 by using an injection molding technology. However, the projection portions 2 may be formed as separate configuration parts, and the parts may be glued on or embedded into appropriate positions of the inner surface 1a of the cover member 1.

As illustrated in Fig. 2A, the main body of the protection member 10 includes an insulating substrate 11, the heating body 14 layered on the insulating substrate 11 and surrounded by an insulating member 15, electrodes 12 and 12 formed at both ends of the insulating substrate 11, a heating body internal electrode 16 layered on the insulating member 15 to superimpose with the heating body 14, and the fusible conductor 13, both ends of which are connected to the electrodes 12 and 12, and a central portion of which is connected to the heating body internal electrode 16. The flux 17 is applied on the fusible conductor 13. Further, as illustrated in Fig. 2B, the entire protection member 10 according to the present invention is configured such that the cover member 1 of Fig. 1 is put on the insulating substrate 11 of the main body of the protection member 10. When the cover member 1 is put on the insulating substrate 11, the three cylindrical projection portions 2 come in contact with the surface of the flux 17, and the interiors of the cylindrical projection portions 2 are filled with the flux 17 by the surface tension of the flux 17.

The rectangular insulating substrate 11 is formed of an insulating member having insulation properties, such as alumina, a glass ceramic, mullite, or zirconia. Alternatively, a material used for a print circuit substrate, such as a glass epoxy substrate or a phenolic substrate, may be used. However, the temperature at the time of melting a fuse needs to be kept in mind.

The heating body 14 is a conductive member having a relatively high resistance value and generates heat when being energized. The heating body 14 is made of W, Mo, Ru, and the like, for example. An alloy, a composition, or a compound thereof in a powder state is mixed with a resin binder, and is made into a paste. The paste is pattern-formed on the insulating substrate 11 by using a screen printing technology, and is sintered to form the heating body 14.

The insulating member 15 is arranged to cover the heating body 14, and the heating body internal electrode 16 is arranged to face the heating body 14 through the insulating member 15.

One end of the heating body internal electrode 16 is connected to a heating body electrode 18. Further, the other end of the heating body 14 is connected to the other heating body electrode 18.

The fusible conductor 13 may just be formed of any conductive material as long as the material is melted and fused by predetermined power or heat, and for example, a BiSn alloy, a BiPb alloy, a BiSn alloy, an SnPb alloy, a PbIn alloy, a ZnAl alloy, an InSn alloy, or a PbAgSn alloy can be used.

The flux 17 has low viscosity, and is almost uniformly spread and distributed when being applied on the fusible conductor 13, at the time of manufacturing the protection member 10. The solvent is volatilized as time passes, and the viscosity is increased.

### [Method of Using Protection Member]

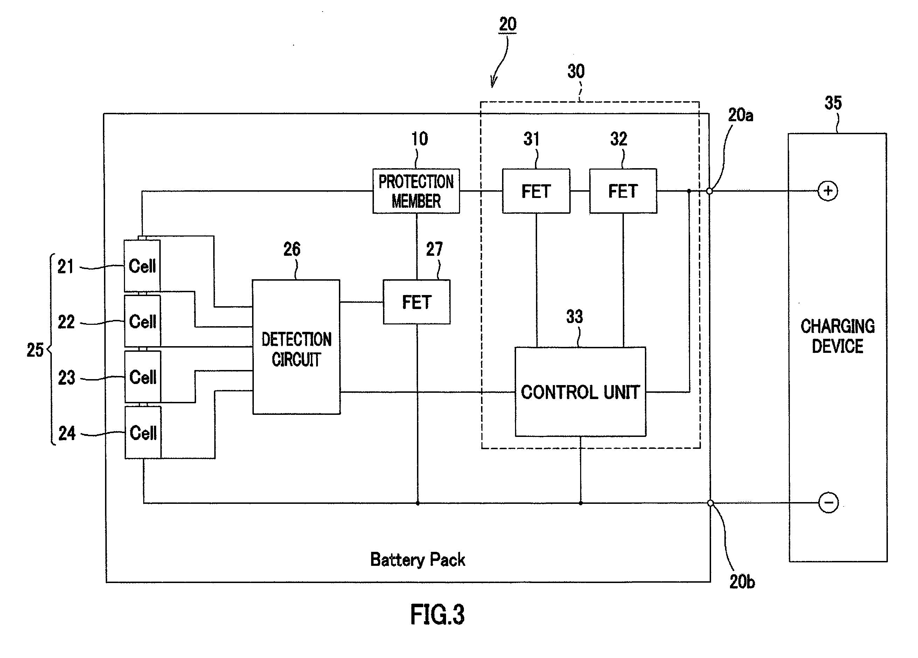

As illustrated in Fig. 3, the protection member 10 is used for a circuit inside a battery pack of a lithium ion secondary battery.

For example, the protection member 10 is used by being incorporated in a battery pack 20 including a battery stack 25 made of a total of four battery cells 21 to 24 of lithium ion secondary batteries.

The battery pack 20 includes the battery stack 25, a charge/discharge control circuit 30 that controls charging/discharging of the battery stack 25, the protection member 10 to which the present invention is applied and which protects the battery stack 25 and the charge/discharge control circuit 30, a detection circuit 26 that detects voltages of the battery cells 21 to 24, and a current control element 27 that controls an operation of the protection member 10 according to a detection result of the detection circuit 26.

The battery stack 25 is formed such that the battery cells 21 to 24 that require control for protecting an overcharge or over-discharge state are connected in series. The battery stack 25 is detachably connected to a charging device 35 though a positive electrode terminal 20a and a negative electrode terminal 20b of the battery pack 20, and is applied a charging voltage from the charging device 35. The positive electrode terminal 20a and the negative electrode terminal 20b of the battery pack 20 charged by the charging device 35 are connected to an electronic device that is operated by the battery, so that the electronic device can be operated.

The charge/discharge control circuit 30 includes two current control elements 31 and 32 connected to a current path in series, a current flowing through the current path from the battery stack 25 to the charging device 35, and a control unit 33 that controls operations of the current control elements 31 and 32. The current control elements 31 and 32 are configured from field effect transistors (hereinafter, referred to as FETs), for example, and the control unit 33 controls conduction and cutoff of the current path of the battery stack 25 by controlling gate voltages. The control unit 33 is operated by being supplied power from the charging device 35, and controls the operations of the current control elements 31 and 32 to cut off the current path when the battery stack 25 is overcharged or over-discharged according to a detection result of the detection circuit 26.

The protection member 10 is connected to a charge/discharge current path between the battery stack 25 and the charge/discharge control circuit 30, for example, and its operation is controlled by the current control element 27.

The detection circuit 26 is connected with the battery cells 21 to 24, detects voltage values of the battery cells 21 to 24, and supplies the voltage values to the control unit 33 of the charge/discharge control circuit 30. Further, the detection circuit 26 outputs a control signal that controls the current control element 27 when any one of the battery cells 21 to 24 becomes to have an overcharge voltage, or an over-discharge voltage.

The current control element 27 operates and controls the protection member 10 to cut off the charge/discharge current path of the battery stack 25 regardless of switching operations of the current control elements 31 and 32, by a detection signal output from the detection circuit 26, when the voltage values of the battery cells 21 to 24 become voltages exceeding a predetermined overcharge voltage or over-discharge voltage.

A configuration of the protection member 10 in the battery pack 20 having the above-described configuration will be specifically described.

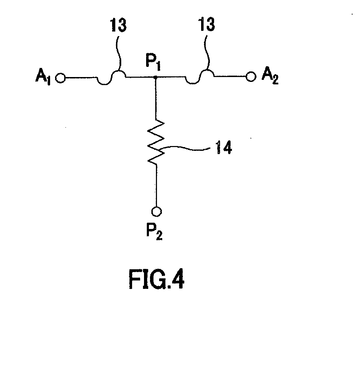

First, the protection member 10 to which the present invention is applied includes a circuit configuration as illustrated in Fig. 4, for example. That is, the protection member 10 has a circuit configuration made of the fusible conductor 13 connected in series through the heating body internal electrode 16, and the heating body 14 that melts the fusible conductor 13 by being energized through a connection point of the fusible conductor 13 and generating heat. Further, in the protection member 10, the fusible conductor 13 is connected to the charge/discharge current path in series, and the heating body 14 is connected with the current control element 27, for example. One of the two electrodes 12 and 12 of the protection member 10 is connected to A1 and the other is connected to A2. Further, the heating body internal electrode 16 and the heating body electrode 18 connected thereto are connected to P1, and the other heating body electrode 18 is connected to P2.

The protection member 10 made of such a circuit configuration can reliably fuse the fusible conductor 13 on the current path by heat generation of the heating body 14 while realizing height reduction.

### [Function of Cover Member]

Hereinafter, a function of a cover member of a conventional protection member will be described in describing a function of the cover member 1 used for the protection member 10 according to the present invention.

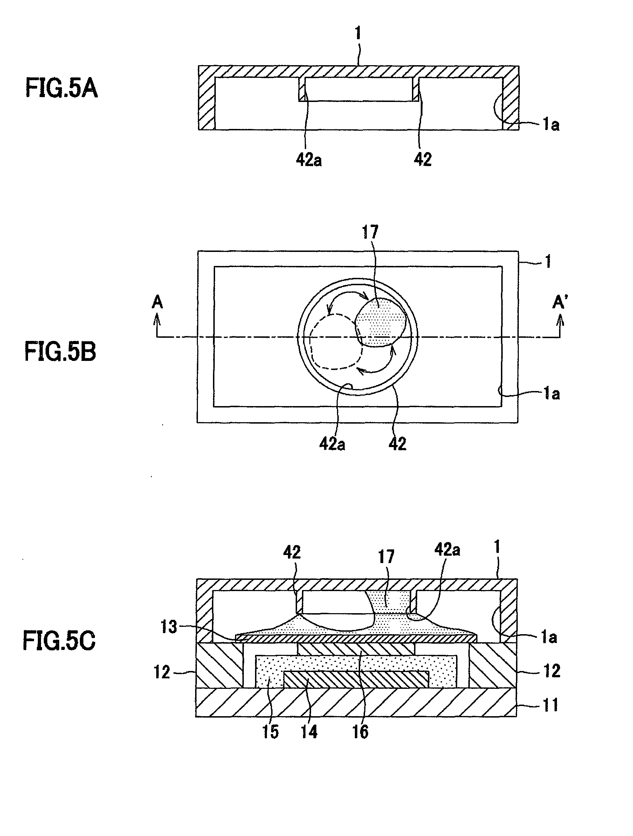

As illustrated in Figs. 5A and 5C, a cover member 1 of a conventional protection member includes a projection portion 42 formed on an inner surface 1a of the cover member 1 to face a position where a heating body 14 is arranged. The protrusion 42 is cylindrical shape, whose bottom surface is formed of an inner surface 1a of the cover member 1 and has an inner surface 42a, with its head opened. The area in the head of the projection portion 42 is set to cover nearly 80% of the area of the facing heating body 14.

However, if the diameter of the cylinder is set large, surface tension of flux 17 may not sufficiently resist the gravity in the vicinity of a central portion of the cylinder. Therefore, the interior of the projection portion 42 may not be sufficiently filled with the flux 17. If so, as illustrated in Fig. 5B, the position of the flux 17 inside the projection portion 42 may vary. As illustrated in Fig. 5C, the flux 17 is not uniformly applied on a region on the fusible conductor 13, the region being corresponding to the heating body 14, and the amount of the applied flux 17 is low except for a part of the region. In such a state, when the heating body 14 is energized and generates heat, or an excessive current flows in the fusible conductor 13, and the temperature rises, position deviation is caused in temperature distribution of the fusible conductor 13, and variation is caused in the fusing characteristics of the fusible conductor 13.

When the area drawn by the head of the cylindrical projection portion 42 of the cover member 1 is large, and a volume made by the inner surface 42a is large, the interior of the projection portion 42 is not sufficiently filled with the flux 17, as described above, and variation of the application amount of the flux 17 on the fusible conductor 13 above the heating body 14 is caused. The same happens even if the projection portion 42 is formed into a polygonal shape such as a triangle shape, a square, or the like, instead of the cylindrical shape.

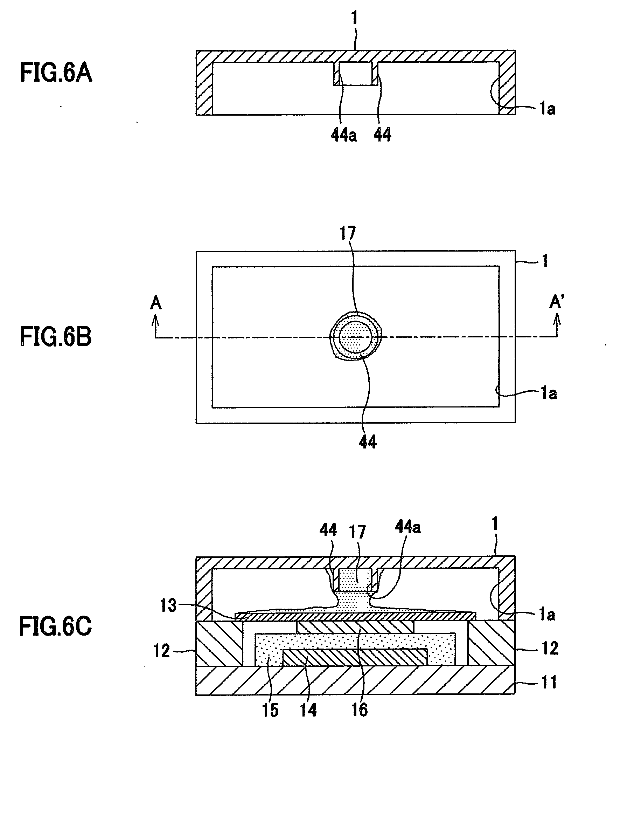

Therefore, as illustrated in Fig. 6A, consider a case in which the diameter of a cylindrical projection portion 44 is decreased, and the volume made by an inner surface 44a of the projection portion 44 is decreased. By doing so, as illustrated in Fig. 6B, the flux 17 can sufficiently fill in the inner surface 44a of the single projection portion 44.

However, as illustrated in Fig. 6C, the area of a head of the projection portion 44 is smaller than the area of the heating body 14. Therefore, the application amount of the flux 17 in the vicinity of the central portion of the heating body 14 is large, and the application amount may become drastically small as separating from the central portion. As a result, a difference of the application amount of flux 17 between the central portion and a region other than the central portion of the heating body 14 becomes large, and a difference is also caused in the heat generation distribution of the fusible conductor 13 according to the difference. Therefore, variation is caused in the fusing characteristics of the fusible conductor 13.

As illustrated in Fig. 1, in the protection member 10 according to the present invention, the area drawn by the head of the projection portion 2 is decreased such that the head of the projection portion 2 of the cover member 1 faces the heating body 14 and comes in contact with the flux 17, so that the flux amount attracted by one projection portion 2 is decreased. Further, with regard to the decreased amount of the flux attracted by one projection portion 2, a sufficient facing area is secured with respect to the surface area of the heating body 14 by forming a plurality of projection portions 2, and the flux amount attracted by the surface tension of the flux 17 is secured. While it is favorable to arrange three projection portions 2 to be at the positions on the inner surface 1a of the cover member 1 and facing the heating body 14, various modifications can be made, as described below. Four or more or two projection portions may be used.

Note that it is favorable that the shape of the projection portion 2 is a circle because the area drawn by the head is maximized with respect to the peripheral length of the head. However, other shapes may be employed.

### [Modification 1]

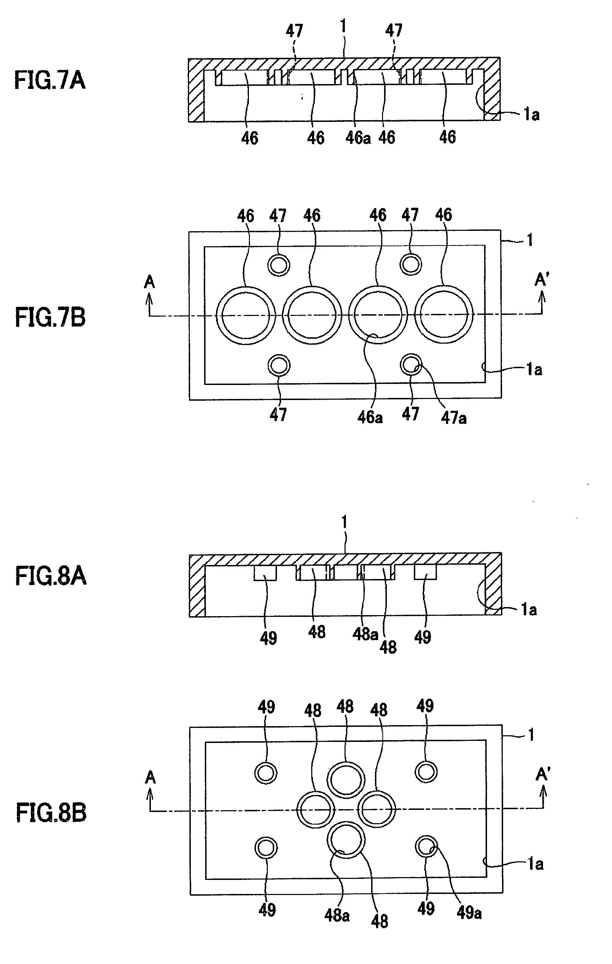

As illustrated in Figs. 7A and 7B, two cylindrical projection portions 46 are arranged at positions facing a heating body 14, and further, the same two cylindrical projection portions 46 are arranged at outsides of the projection portions 46, that is, at sides where electrodes 12 and 12 are arranged. As a result, the cylindrical projection portions 46 having the same shapes are aligned at positions facing a fusible conductor 13. Accordingly, flux 17 applied on the fusible conductor 13 is uniformly attracted to heads of the cylindrical projection portions 46, and respective inner surfaces 46a are filled with the flux 17, so that the amount of the flux 17 is almost uniformly distributed not only above the heating body 14, but also on most of the region of the fusible conductor 13. Making the flux amount on the fusible conductor 13 uniform not only contributes to a decrease in variation of fusing characteristics of when the heating body 14 is used, but also enables a decrease in variation of fusing characteristics against an excessive current of the fusible conductor.

Further, cylindrical projection portions 47 having a smaller diameter than the above-described projection portions 46 may be arranged at positions corresponding to four corners of the heating body 14. By arranging the cylindrical projection portions 47 having a small diameter at the positions facing four corners of the heating body 14, the flux 17 is attracted to inner surfaces 47a of the cylindrical projection portions 47 having a small diameter, even if the amount of the flux 17 is large, whereby flowing out of the flux 17 toward the insulating substrate 11 can be stopped.

As illustrated in Figs. 8A and 8B, four cylindrical projection portions 48 having inner surfaces 48a may be arranged on an inner surface 1a of the cover member 1 and at central portions of the heating body 14 to cover a larger area on a surface of the heating body 14. Similarly to the case of Figs. 7A and 7B, by arranging of cylindrical projection portions 49 having a small diameter at positions facing four corners of the heating body 14, the flux 17 is attracted to inner surfaces 49a of the cylindrical projection portions 49 having a small diameter, even if the amount of the flux 17 is large, whereby flowing out of the flux 17 toward the insulating substrate 11 can be stopped.

In the cases of Figs. 7A and 7B, and 8A and 8B, it is favorable that areas drawn by heads of the cylindrical projection portions 46 and 48 facing the heating body 14 are about 80% or more of a surface area of the heating body 14 in terms of uniformity of the application amount of the flux 17.

Note that the sizes of the diameters of the projection portions 46, 47, 48, and 49 in the cases of the Figs. 7A and 7B, and 8A and 8B are examples, and are not limited to the above descriptions. Further, respective heights of the projection portions 46, 47, 48, and 49 are the same in the examples of Figs. 7A and 7B, and 8A and 8B. However, it is apparent that the heights are not limited to the examples.

### [Modification 2]

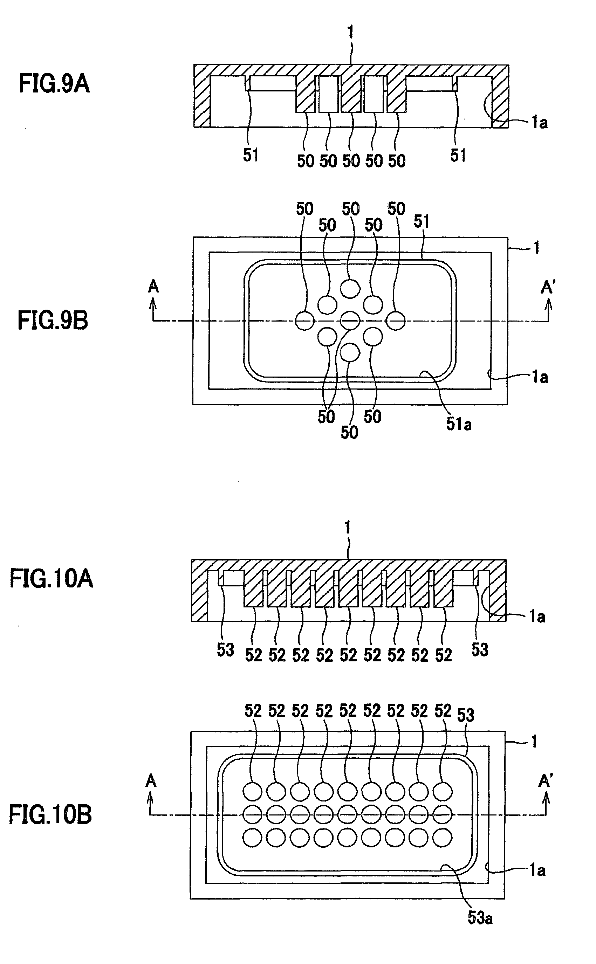

The shape of a projection portion formed on the inner surface 1a of the cover member 1 is not necessarily a cylindrical shape as long as an area drawn by the periphery of the head is small, and a plurality of projection portions is formed. As illustrated in Figs. 9A and 9B, nine columnar projection portions 50 having a small diameter may be arranged at positions facing a heating body 14. Flux 17 attached to the heads of the projection portions 50 is attracted to a space between adjacent projection portions 50 by surface tension. An arrangement pattern of the projection portions 50 does not necessarily accord with the rectangular shape of the heating body 14, and the projection portions 50 may be arranged in a rhombic manner.

As illustrated in Figs. 10A and 10B, a large number of (3 × 9= 27) columnar projection portions 52 may be provided in accordance with rectangular shapes of the heating body 14 and a fusible conductor 13. By equally arranging of a large number of projection portions 52 on the fusible conductor, flux 17 is distributed not only above the heating body 14, but also on most of a region of the fusible conductor 13 with uniform thickness. Making the flux amount on the fusible conductor 13 uniform not only contributes to a decrease in variation of fusing characteristics of the heating body 14 of when the heating body 14 is used, but also enables a decrease in variation of fusing characteristics against an excessive current of the fusible conductor.

In the cases of Figs. 9A and 9B, and 10A and 10B, projection portions 51 and 53 having wall surfaces 51a and 53a may be configured to surround the arranged projection portions 50 and 52. The projection portions 51 and 53 can prevent ununiformity of the flux amount due to flowing out of the flux 17, similarly to the cylindrical projection portions 47 and 49 having a small diameter in the cases of Figs. 7A and 7B, and 8A and 8B.

Note that the shape of the columnar projection portions may be a frustum shape, in any case.

### [Modification 3]

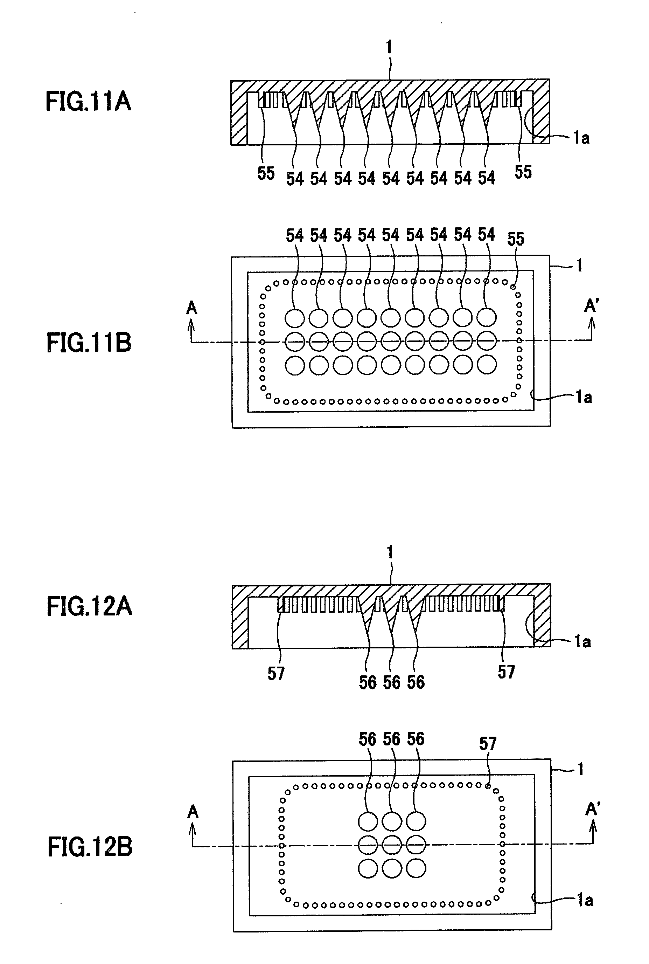

The shape of a projection portion formed on the inner surface 1a of the cover member 1 is not limited to the above-described cylindrical shape, columnar shape or frustum shape. As illustrated in Figs. 11A and 11B, projection portions may have a cone shape with a sharp head. While cone projection portions 54 are favorably arranged at positions facing a heating body 14, the arrangement may be expanded to positions facing the fusible conductor 13 as illustrated in Fig. 11.

As illustrated in Figs. 12A and 12B, the projection portions may be arranged only at positions facing the heating body 14.

In the cases of Figs. 11A and 11B, and 12A and 12B, projection portions 55 and 57 for prevention of flowing out may be arranged to surround the cone projection portions 54 and 56 in order to prevent ununiformity of the flux amount due to flowing out of the flux 17. By use of surface tension of the flux 17, even if the projection portions 51 and 53 having the wall surfaces 51a and 53a like the examples of Figs. 9A and 9B, and 10A and 10B are not formed, the flowing out of the flux 17 can be prevented by arranging of a large number of columnar projection portions 55 and 57.

### Reference Signs List

- 1: Cover member
- 1a: Inner surface of cover member
- 2, 42, 44, and 46 to 57: Projection portion
- 2a, and 42a to 49a: Inner surface of projection portion
- 10: Protection member
- 11: Insulating substrate
- 12: Electrode
- 13: Fusible conductor
- 14: Heating body
- 15: Insulating member
- 16: Heating body inner electrode
- 17: Flux
- 18: Heating body electrode
- 20: Battery pack
- 20a: Positive electrode terminal
- 20b: Negative electrode terminal
- 21 to 24: Battery cell
- 25: Battery stack
- 26: Detection circuit
- 27, 31, and 32: Current control element
- 30: Charge/discharge control circuit
- 33: Control unit
- 35: Charging device

## Claims

1. A protection member comprising:
an insulating substrate;
a heating body layered on the insulating substrate;
an insulating member layered on the insulating substrate to cover at least the heating body;
a first electrode and a second electrode layered on the insulating substrate on which the insulating member is layered;
a heating body internal electrode layered on the insulating member to superimpose with the heating body, and electrically connected with a current path between the first electrode and the second electrode, and with the heating body;
a fusible conductor layered from the heating body internal electrode to the first electrode and to the second electrode, and configured to fuse a current path between the first electrode and the second electrode by heating;
flux applied on the fusible conductor to superimpose with the heating body; and
a cover member covering at least the fusible conductor and attached to the insulating substrate,
wherein the cover member includes a plurality of projection portions having annular peripheries formed on an inner surface of the cover member to be in contact with the flux, and facing the heating body.

2. The protection member according to claim 1, wherein the plurality of projection portions having annular peripheries has a plurality of cylindrical shapes, columnar shapes, or frustum shapes.

3. The protection member according to claim 2, wherein a total of outer peripheral areas of the plurality of cylinders, columns, or frustums is 80% or more with respect to an area of the heating body.

4. The protection member according to claim 3, wherein the number of the plurality of cylinders, columns, or frustums is three or more.

5. The protection member according to any one of claims 2 to 4, wherein the plurality of cylinders, columns, or frustums is arranged to align parallel to an energizing direction of the fusible conductor.

6. The protection member according to claim 5, wherein the plurality of cylinders, columns, or frustums is arranged at positions of an outer periphery of the heating body.

7. The protection member according to claim 2, wherein the plurality of projection portions having annular peripheries is pyramid having vertexes at a side where the flux is applied.
